# EUROPÄISCHE PATENTSCHRIFT

(11) **EP 3 207 293 B1**
(45) Veröffentlichungstag und Bekanntmachung des Hinweises auf die Patenterteilung: **05.06.2019**
(21) Anmeldenummer: 15781607.5
(22) Anmeldetag: 07.10.2015
(51) Int. Cl.: F16K 1/42, F16K 27/02

(54) **ARMATUR MIT WECHSELSITZSYSTEM**
ARMATURE WITH AN ALTERNATING SEAT SYSTEM
ÉLÉMENT DE TUYAUTERIE À SYSTÈME DE SIÈGE REMPLAÇABLE

(30) Priorität: 13.10.2014 DE 102014220675
(43) Veröffentlichungstag der Anmeldung: 23.08.2017
(73) Patentinhaber: KSB SE & Co. KGaA, 67227 Frankenthal (DE)
(72) Erfinder: HAMBERGER, Mario, 67227 Frankenthal (DE); WALBERER, Andreas, 67227 Frankenthal (DE); WIERLING, Christian, 67227 Frankenthal (DE)
(86) Internationale Anmeldenummer: PCT/EP2015/073100
(87) Internationale Veröffentlichungsnummer: WO 2016/058874

(56) Entgegenhaltungen:
- EP-A1- 2 746 631
- EP-A2- 1 898 006
- DE-A1-102012 100 433
- DE-U1- 8 509 464
- GB-A- 2 447 267
- US-A- 4 493 338
- US-A- 5 255 704
- US-A1- 2014 175 311
- US-A1- 2014 264 135

## Beschreibung

Die Erfindung betrifft eine Armatur mit einem Gehäuse, in dem ein Sitz angeordnet ist, wobei ein Absperrkörper mittels eines Elements zur Einstellung eines Durchflusses verschiebbar angeordnet ist.

Armaturen werden auch als Absperrorgane oder Stellglieder bezeichnet. Sie dienen zum Sperren und Öffnen von Rohrleitungen bzw. zum Regulieren von Fluidströmen. Ein Absperrkörper gibt mit einer Abhebebewegung einen Strömungsquerschnitt zur Einstellung eines Durchflusses frei. In geschlossener Position verschließt der Absperrkörper den Sitz, der häufig als Sitzring ausgebildet ist. Der Absperrkörper wird mittels eines Elementes verfahren und gibt dann eine meist ringförmige Durchflussöffnung frei. Bei dem Element zur Verschiebung des Absperrkörpers kann beispielsweise ein Ventilschaft oder eine Spindel eingesetzt werden. Der Sitz ist in einem Gehäuse der Armatur angeordnet und ist meist mit einer Dichtung ausgestattet.

In der EP 0 177 397 B1 wird ein Ventilhahn beschrieben. Ein Element ist längs der Achse des Hahnes translations-beweglich angeordnet. An einem Ende dieses Elementes befindet sich ein Absperrkörper. Der Ventilsitz wird durch ein ringförmiges Teil gebildet.

In der EP 1 618 324 B1 wird eine Armatur mit einem Gehäuse beschrieben, die einen hin- und herbeweglichen Absperrkörper umfasst, der in einem Käfig während seiner hin- und hergehenden Bewegungen geführt wird und welcher mit Öffnungen versehen ist.

Die DE 28 08 094 zeigt ein Ventil mit einem Ventileinsatz, bei dem sich der Sitz auf einfache Weise erneuern lässt.

Die DE 2 224 269 zeigt ein Druckminderventil mit einem gegen das Ventilgehäuse abgedichteten Einsatzkörper.

US2014/0264135 A1 zeigt ein Ventil mit einem Einsatzkörper bei dem der Sitz mit einem speziellen Werkzeug einbaubar ist.

Die GB 2 447 267 A zeigt ein Ventil mit einem Ventilsitz, der auswechselbar ausgestaltet ist.

Die US 4 493 338 A eine Wechselpatrone für ein Ventil mit einem auswechselbaren Sitz.

Die DE 85 09 464 U1 zeigt verschieden wirkende Ventileinsätze für ein Heizkörperventil.

Die Öffnungen dienen für das In-Verbindung-Bringen des Einlassdurchgangs mit dem Auslassdurchgang in der geöffneten Position des Absperrkörpers. Die Armatur verfügt über einen Ventilsitz, der vorgesehen ist, um mit dem Absperrkörper in dessen geschlossener Position zusammenzuwirken. Weiterhin weist die Armatur einen Gegensitz mit Auflage auf einem Teil des Gehäuses auf. Eine Dichtung ist zwischen dem Sitz und dem Gegensitz eingeschlossen.

Bei herkömmlichen Armaturen ist ein Austausch des Ventilsitzes häufig sehr aufwendig. Meist sind dazu Spezialwerkzeuge erforderlich. Auch die Montage des Ventilsitzes ist aufgrund der meist hohen Anzahl an Teilen aufwendig. Zudem besteht die Gefahr von Verwechslungen, sodass bei herkömmlichen Armaturen bei der Montage Fehler auftreten und eine sichere Abdichtung nicht gewährleistet ist.

Aufgabe der Erfindung ist es, eine Armatur anzugeben, bei der der Sitz auf einfache Weise ausgetauscht werden kann. Zudem soll die Montage des Sitzes erleichtert werden und Verwechselungen vermieden werden. Dabei soll sich die Armatur durch eine preiswerte Herstellungsweise auszeichnen und möglichst wartungsarm sein.

Diese Aufgabe wird erfindungsgemäß durch eine Armatur mit den Merkmalen des Anspruchs 1 gelöst. Bevorzugte Varianten sind in den Unteransprüchen ausgeführt.

Erfindungsgemäß ist das Element, welches den Absperrkörper bewegt, zumindest teilweise von einer Führungshülse umgeben. Die Führungshülse weist eine Verbindung mit dem Sitz auf. Vorzugsweise handelt es sich dabei um eine kraftschlüssige Verbindung. Bei einer besonders günstigen Variante handelt es sich dabei um eine Gewindeverbindung.

Die Führungshülse wird in eine Bohrung im Gehäuse eingefügt und umgibt das stangenartige Element, welches den Absperrkörper bewegt. Die Führungshülse kann aus der Bohrung herausgezogen werden, wobei durch die erfindungsgemäße Verbindung der Führungshülse mit dem Ventilsitz dabei der Ventilsitz ebenfalls aus der Bohrung herausbewegt wird. Bei einem Einführen des Sitzes wird zunächst die Verbindung zwischen der Führungshülse und dem Ventilsitz hergestellt und dann die Führungshülse mitsamt dem Ventilsitz in die Bohrung eingeführt.

Der Absperrkörper ist zumindest teilweise in der Führungshülse angeordnet. Dabei weist die Führungshülse eine Öffnung für den Durchfluss auf. Wird der Absperrkörper von dem beispielsweise als Spindel ausgeführten Element aus seinem Ventilsitz bewegt, so wird ein Strömungsquerschnitt freigegeben, durch den das Fluid fließt und durch die Öffnung in der Führungshülse zu einem Austrittskanal gelangt. Bei einer vorteilhaften Variante der Erfindung steht die Führungshülse mit einem Zwischenstück in Verbindung. Das Zwischenstück ist zumindest teilweise außerhalb des Gehäuses angeordnet. Vorzugsweise ragt es dabei mit einem Abschnitt in die Bohrung des Gehäuses hinein, in der die Führungshülse angeordnet ist. Vorzugsweise besteht zwischen der Führungshülse und dem Zwischenstück eine formschlüssige Verbindung. Dazu kann das Zwischenstück Vertiefungen aufweisen, in die die Führungshülse teilweise eingreift. Dies kann durch das Verpressen von Stegen im Bauteil realisiert werden. Die erfindungsgemäße Verbindung der Führungshülse mit dem Zwischenstück ermöglicht das Einsetzen eines Dichtelementes. Zudem kann man durch Ziehen an dem Zwischenstück den kompletten Strang aus dem Gehäuse entfernen. Die formschlüssige Verbindung der Führungshülse mit dem Zwischenstück gewährleistet zudem eine Verdrehsicherung. Die Laschen im Führungsrohr, welche in Vertiefungen des Zwischenstücks eingreifen, gewährleisten die Verdrehsicherung. Dabei ist ein Einbau vorzugsweise nur in einer Orientierung möglich. Es handelt sich somit um eine formschlüssige Verbindung, die erfindungsgemäß ohne weitere Bauteile auskommt und eine Verdrehsicherung gewährleistet.

Erfindungsgemäß ist am Sitz ein Dichtelement angeordnet, das eine Verbindung mit dem Sitz aufweist. Erfindungsgemäß handelt es sich dabei um eine formschlüssige Verbindung. Dies wird durch eine Hinterschneidung realisiert. Eine solche Hinterschneidung ermöglicht auch das sichere Herausziehen des Dichtelements. Im unverpressten Zustand hat die Dichtung einen Rechteckquerschnitt, und die Dichtung füllt die Hinterschneidung nicht aus. Erst durch ein Verpressen über den Sitz wird die Dichtung zu einer Formänderung geführt. Beim Anbringen der Dichtung wird diese auf den Ventilsitz geschoben. Dadurch kann das Dichtelement ohne zusätzliche Teile eingesetzt werden. Die Dichtung wird in eine Hinterdrehung gepresst. Dabei sind auch andere Geometrien der Hinterdrehung denkbar. Erfindungsgemäß ist ein Ausbau ohne zusätzliche Teile möglich. Die Scherkraft des Dichtelements ist dabei ausreichend.

Erfindungsgemäß weist der Sitz eine Aussparung für das Dichtelement auf. Bei herkömmlichen Armaturen gemäß dem Stand der Technik ist die Dichtung gekammert. Bei der erfindungsgemäßen Armatur ist kein weiteres Element um die Dichtung herum erforderlich. Dies bringt Fertigungstechnisch erhebliche Vorteile mit sich.

Weitere Merkmale und Vorteile der Erfindung ergeben sich aus der Beschreibung eines Ausführungsbeispiels anhand von Zeichnungen und aus den Zeichnungen selbst.

Dabei zeigt:
- Figur 1: eine Schnittzeichnung durch einen Teil der Armatur,
- Figur 2: eine Ausschnittsvergrößerung eines Bereichs des Ventilsitzes,
- Figur 3: eine Ausschnittsvergrößerung eines Bereichs der Führungshülse beim Zusammenwirken mit dem Zwischenstück,
- Figur 4: eine perspektivische Darstellung der Führungshülse,
- Figur 5: eine perspektivische Darstellung des Zwischenstücks.

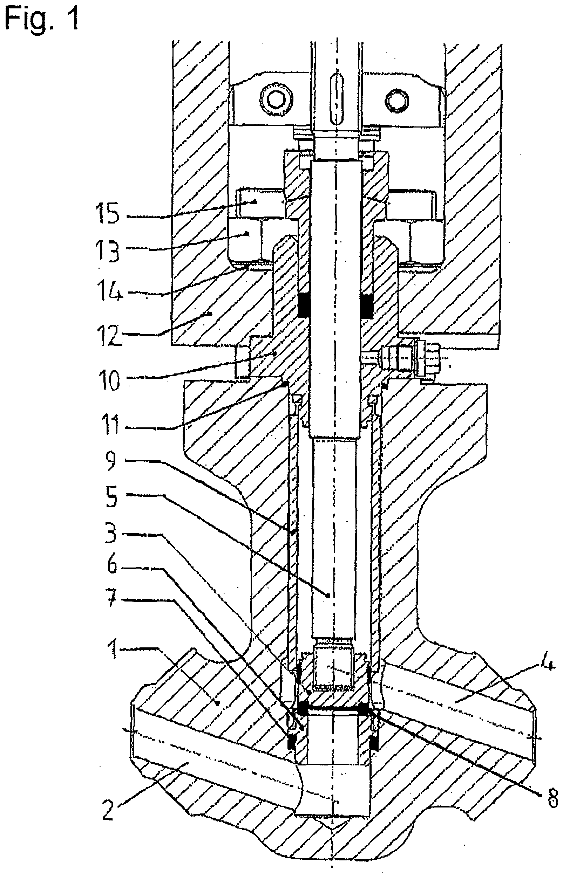

Figur 1 zeigt einen Ausschnitt einer Schnittdarstellung einer Armatur, die ein Gehäuse 1 aufweist. Das Fluid strömt durch eine Zuströmpassage 2. Ein Absperrkörper 3 wird durch eine Translationsbewegung verschoben und gibt einen Strömungsquerschnitt frei, durch den das Fluid strömt und zu einer Ausströmpassage gelangt. Im Ausführungsbeispiel ist der Absperrkörper 3 zylinderförmig ausgebildet.

Die Translationsbewegung des Absperrkörpers 3 erfolgt mittels eines stangenartigen Elements 5, das im Ausführungsbeispiel als Spindel ausgestaltet ist. Das Element 5 steht mit einem in Figur 1 nicht dargestellten Stellantrieb in Verbindung, welcher das Element 5 in vertikaler Richtung nach oben oder unten bewegt. Alternativ kann auch ein Handrad zur Betätigung zum Einsatz kommen. Im Ausführungsbeispiel weist der Absperrkörper 3 eine Öffnung auf, in die das Element 5 eingreift, wobei eine kraftschlüssige Verbindung zwischen dem Absperrkörper 3 und dem Element 5 besteht. Alternativ zur dargestellten Variante kann der Absperrkörper 3 auch an dem Element 5 angeformt sein, sodass der Absperrkörper 3 und das Element 5 einstückig ausgebildet sind.

In dem Gehäuse 1 ist ein Sitz 6 angeordnet. Der Sitz 6 ist ringförmig ausgebildet und wirkt mit dem Absperrkörper 3 in dessen geschlossener Position zusammen. Zwischen dem ringförmigen Sitz 6 und dem Gehäuse 1 ist ein Dichtelement 7 angeordnet. Das Dichtelement 7 ist ringförmig ausgebildet. Ein Dichtelement 8 sorgt für die Abdichtung zwischen dem Absperrkörper 3 und dem Sitz 6 in geschlossener Position.

Das Element 5, welches den Absperrkörper 3 bewegt, ist von einer Führungshülse 9 umgeben. Die Führungshülse 9 dient als Abstandshülse und steht mit einem Zwischenstück 10 in Verbindung. Ein Dichtelement 11 dichtet das Gehäuse 1 zum Zwischenstück 10 ab.

Das Zwischenstück 10 weist eine innere Öffnung auf, in der das Element 5 verschieblich angeordnet ist. Das Zwischenstück 10 greift in eine Öffnung eines Bauteils 12 ein, das im Ausführungsbeispiel als Bügel ausgebildet ist. Das Zwischenstück 10 ist in seinem oberen Bereich von einer Mutter 13 umgeben. Zwischen der Mutter 13 und dem als Bügel ausgebildeten Bauteil 12 ist eine Scheibe 14 angeordnet.

Oberhalb der Mutter 13 ist eine Schraube 15 angeordnet.

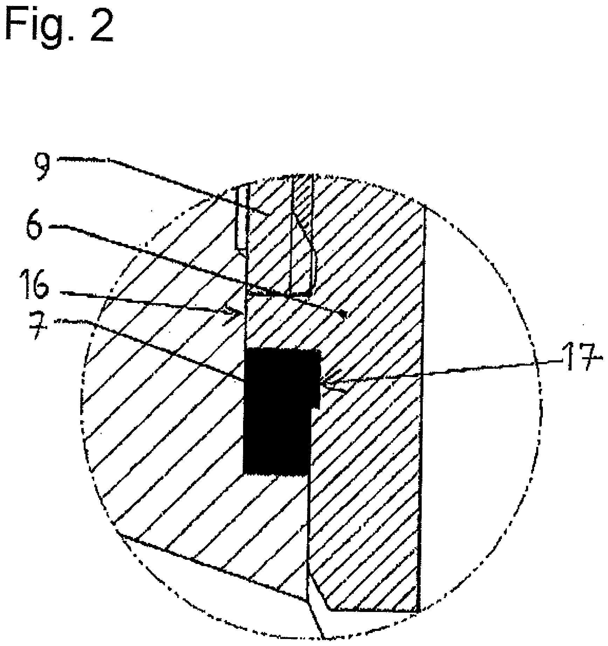

Figur 2 zeigt eine Ausschnittsvergrößerung eines Bereichs des Ventilsitzes. Erfindungsgemäß erstreckt sich die Führungshülse 9 bis zum Sitz 6 und weist mit dem ringförmigen Sitz 6 eine Verbindung auf. Dazu ist die Führungshülse 9 in ihrem unteren Bereich mit einem Innengewinde versehen, das in ein Außengewinde des ringförmigen Sitzes 6 eingreift.

Der ringförmige Sitz 6 weist einen Vorsprung 16 auf. Der Vorsprung 16 erstreckt sich entlang des Umfanges des Sitzes 6. Weiterhin weist der ringförmige Sitz 6 eine Aussparung 17 auf, die sich als Nut entlang des Umfanges des ringförmigen Sitzes 6 erstreckt. Durch diese Gestaltung entsteht eine formschlüssige Verbindung des Sitzes 6 mit dem Dichtelement 7, welches durch die Hinterschneidung realisiert wird.

Beim Anbringen des Dichtelements 7 wird das Dichtelement 7 auf den ringförmigen Sitz 6 geschoben. Erfindungsgemäß kann das Dichtelement 7 ohne zusätzliche Teile eingesetzt werden. Über die Schraube 15 wird das Dichtelement 7 in die Hinterdrehung gepresst. Andere Geometrien der Hinterdrehung sind denkbar. Die erfindungsgemäße Konstruktion ermöglicht einen Ausbau ohne zusätzliche Teile. Die Scherkraft des Dichtelements 7 ist hierfür ausreichend. Im unverpressten Zustand hat das Dichtelement 7 einen Rechteckquerschnitt und füllt die Hinterschneidung nicht aus. Erst das Verpressen über den Sitz 6 zwingt das Dichtelement 7 zu einer Formänderung.

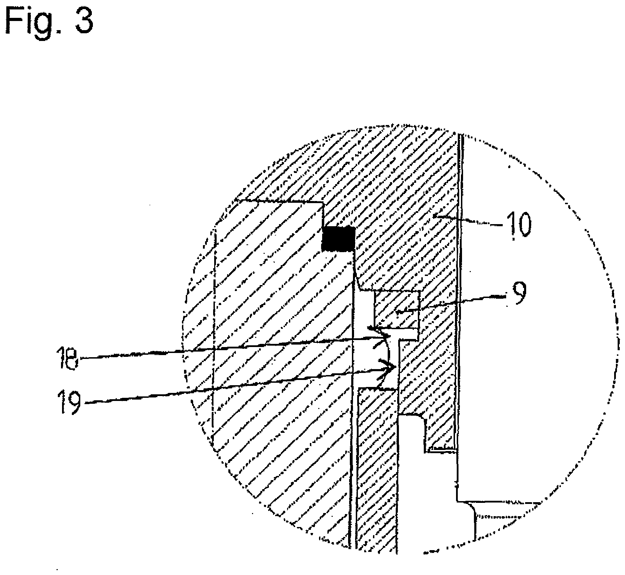

Figur 3 zeigt einen vergrößerten Ausschnitt des oberen Bereichs der Führungshülse 9. Erfindungsgemäß weist die Führungshülse 9 eine Verbindung mit dem Zwischenstück 10 auf. Dabei handelt es sich um eine formschlüssige Verbindung. Im Ausführungsbeispiel sind Laschen in der Führungshülse 9 realisiert, die in Vertiefungen des Zwischenstücks 10 gepresst werden. Das Zwischenstück 10 weist dazu eine Aussparung 18 auf, die als Nut ringförmig entlang des Umfanges des Zwischenstücks 10 verläuft. Weiterhin weist das Zwischenstück 10 einen Vorsprung 19 auf, der ringförmig entlang des Umfanges verläuft.

Die formschlüssige Verbindung zwischen der Führungshülse 9 und dem Zwischenstück 10 wird durch Verpressen von Stegen realisiert. In Kombination mit der kraftschlüssigen Verbindung der Führungshülse 9 mit dem Sitz 6 und der formschlüssigen Verbindung des Sitzes 6 mit dem Dichtelement 7 kann durch ein Ziehen an dem Zwischenstück 10 der komplette Strang aus dem Gehäuse 1 herausgezogen werden.

Das Verdrehen des Wechselsystems wird über die formschlüssige Verbindung der Führungshülse 9 mit dem Zwischenstück 10 realisiert. Der Einbau ist nur in einer Orientierung möglich. Der Tausch des Wechselsitzsystems ist in kürzester Zeit ohne Zuhilfenahme von Spezialwerkzeugen möglich. Im Gegensatz zu herkömmlichen Systemen werden dabei Teile eingespannt und die Montage ist einfacher und zudem verwechslungssicher gestaltet.

Die Verbindung der Führungshülse 9 mit dem Zwischenstück 10 ermöglicht das Einsetzen des Dichtelements 7 sowie das Herausziehen des Dichtelements 7. Die Verbindung ist verdrehsicher ausgeführt.

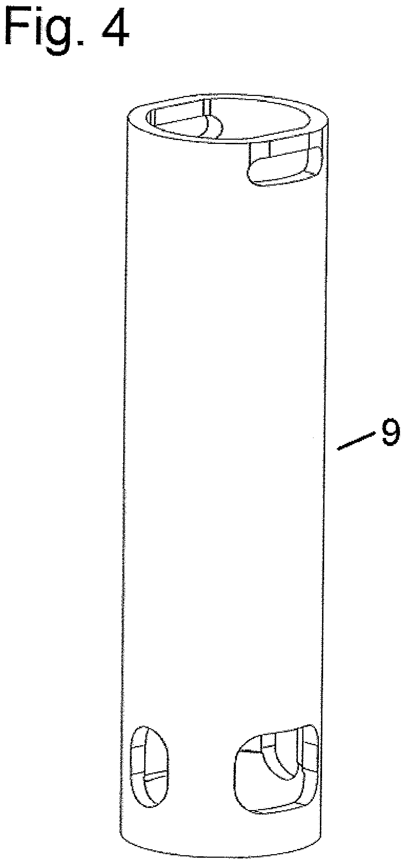

Figur 4 zeigt eine perspektivische Darstellung des oberen Bereichs der Führungshülse 9. Erfindungsgemäß weist die Führungshülse 9 Laschen auf.

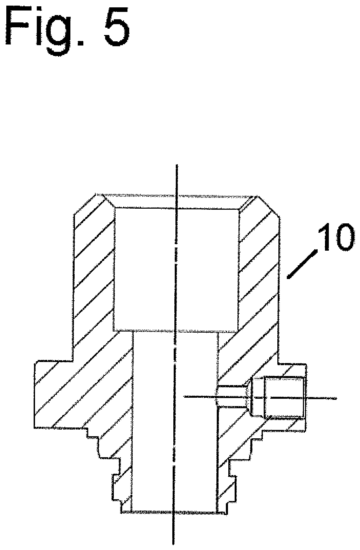

Figur 5 zeigt eine perspektivische Darstellung des Zwischenstücks 10. Die Laschen der Führungshülse 9 greifen in Vertiefungen des Zwischenstücks 10 ein, sodass eine formschlüssige Verbindung entsteht.

Bei einer nicht dargestellten alternativen Variante der Erfindung sind der Sitz 6 und die Führungshülse 9 einstückig miteinander ausgebildet.

Bei einer weiteren nicht dargestellten Variante sind der Sitz 6, die Führungshülse 9 und das Zwischenstück 10 einstückig miteinander ausgebildet.

## Patentansprüche

1. Armatur mit einem Gehäuse (1), in dem ein Sitz (6) angeordnet ist, wobei ein Absperrkörper (3) mittels eines Elements (5) zur Einstellung eines Durchflusses verschiebbar angeordnet ist, wobei das Element (5) zumindest teilweise von einer Führungshülse (9) umgeben ist, die eine Verbindung mit dem Sitz (6) aufweist, wobei der Sitz (6) eine Aussparung (17) für ein Dichtelement (7) aufweist, wobei am Sitz (6) das Dichtelement (7) angeordnet ist, das eine formschlüssige Verbindung mit dem Sitz (6) aufweist, wobei diese durch eine Hinterschneidung realisiert ist, wobei die Hinterschneidung das Herausziehen des Dichtelements ermöglicht,
**dadurch gekennzeichnet, dass**
im unverpressten Zustand das Dichtelement (7) einen Rechteckquerschnitt hat und die Hinterschneidung nicht ausfüllt, und dass das Dichtelement (7) erst durch ein Verpressen über den Sitz (6) zu einer Formänderung geführt wird und in die Hinterschneidung gepresst wird.

2. Armatur nach Anspruch 1, **dadurch gekennzeichnet, dass** die Führungshülse (9) eine kraftschlüssige Verbindung mit dem Sitz (6) aufweist, insbesondere eine Gewindeverbindung.

3. Armatur nach Anspruch 1 oder 2, **dadurch gekennzeichnet, dass** der Absperrkörper (3) zumindest teilweise in der Führungshülse (9) angeordnet ist.

4. Armatur nach einem der Ansprüche 1 bis 3, **dadurch gekennzeichnet, dass** die Führungshülse (9) mit einem Zwischenstück (10) in Verbindung steht.

5. Armatur nach Anspruch 4, **dadurch gekennzeichnet, dass** das Zwischenstück (10) zumindest teilweise außerhalb des Gehäuses (1) angeordnet ist.

6. Armatur nach Anspruch 4 oder 5, **dadurch gekennzeichnet, dass** die Führungshülse (9) eine formschlüssige Verbindung mit dem Zwischenstück (10) aufweist.

7. Armatur nach Anspruch 6, **dadurch gekennzeichnet, dass** das Zwischenstück (10) Vertiefungen aufweist, in die die Führungshülse (9) eingreift.

8. Armatur nach einem der Ansprüche 1 bis 7, **dadurch gekennzeichnet, dass** die Führungshülse (9) mindestens eine Öffnung für den Durchfluss aufweist.

## Claims

1. Armature having a housing (1) in which a seat (6) is arranged, wherein a shut-off body (3) is arranged so as to be displaceable by means of an element (5) for adjusting a flow, wherein the element (5) is surrounded at least in part by a guide sleeve (9) which comprises a connection to the seat (6), wherein the seat (6) comprises a recess (17) for a sealing element (7), wherein the sealing element (7), which comprises a positive locking connection to the seat (6), is arranged on the seat (6), wherein this is realized by means of an undercut, wherein the undercut makes it possible for the sealing element to be pulled out,
**characterized in that**
in the non-pressed state, the sealing element (7) comprises a rectangular cross section and does not fill out the undercut, and **in that** the sealing element (7) is made to change its form, and is pressed into the undercut, only by being pressed over the seat (6).

2. Armature according to Claim 1, **characterized in that** the guide sleeve (9) comprises a non-positive locking connection to the seat (6), in particular a threaded connection.

3. Armature according to Claim 1 or 2, **characterized in that** the shut-off body (3) is arranged at least in part in the guide sleeve (9).

4. Armature according to one of Claims 1 to 3, **characterized in that** the guide sleeve (9) communicates with an intermediate piece (10).

5. Armature according to Claim 4, **characterized in that** the intermediate piece (10) is arranged at least in part outside the housing (1).

6. Armature according to Claim 4 or 5, **characterized in that** the guide sleeve (9) comprises a positive locking connection to the intermediate piece (10).

7. Armature according to Claim 6, **characterized in that** the intermediate piece (10) comprises indentations in which the guide sleeve (9) engages.

8. Armature according to one of Claims 1 to 7, **characterized in that** the guide sleeve (9) comprises at least one opening for the flow.

## Revendications

1. Elément de tuyauterie avec un boîtier (1), dans lequel un siège (6) est disposé, dans lequel un corps de fermeture (3) est déplaçable au moyen d'un élément (5) pour le réglage d'un débit, dans lequel l'élément (5) est entouré au moins en partie par une douille de guidage (9), qui présente une liaison avec le siège (6), dans lequel le siège (6) présente une découpe (17) pour un élément d'étanchéité (7), dans lequel l'élément d'étanchéité (7) est disposé sur le siège (6) et présente un assemblage par emboîtement avec le siège (6), dans lequel ceci est réalisé par une contre-dépouille, dans lequel la contre-dépouille permet l'extraction de l'élément d'étanchéité,
**caractérisé en ce que**
dans l'état non pressé l'élément d'étanchéité (7) a une section transversale rectangulaire et ne remplit pas la contre-dépouille, et **en ce que** l'élément d'étanchéité (7) n'est amené à changer de forme que par un pressage sur le siège (6) et que s'il est pressé dans la contre-dépouille.

2. Elément de tuyauterie selon la revendication 1, **caractérisé en ce que** la douille de guidage (9) présente un assemblage par adhérence avec le siège (6), en particulier un assemblage vissé.

3. Elément de tuyauterie selon une revendication 1 ou 2, **caractérisé en ce que** le corps de fermeture (3) est disposé au moins en partie dans la douille de guidage (9) .

4. Elément de tuyauterie selon l'une quelconque des revendications 1 à 3, **caractérisé en ce que** la douille de guidage (9) est en liaison avec une pièce intermédiaire (10).

5. Elément de tuyauterie selon la revendication 4, **caractérisé en ce que** la pièce intermédiaire (10) est disposée au moins en partie à l'extérieur du boîtier (1).

6. Elément de tuyauterie selon une revendication 4 ou 5, **caractérisé en ce que** la douille de guidage (9) présente un assemblage par emboîtement avec la pièce intermédiaire (10).

7. Elément de tuyauterie selon la revendication 6, **caractérisé en ce que** la pièce intermédiaire (10) présente des creux, dans lesquels la douille de guidage (9) s'engage.

8. Elément de tuyauterie selon l'une quelconque des revendications 1 à 7, **caractérisé en ce que** la douille de guidage (9) présente au moins une ouverture pour le débit.
